# EUROPÄISCHE PATENTANMELDUNG

(11) **EP 2 189 349 A2**
(43) Veröffentlichungstag der Anmeldung: **26.05.2010**
(21) Anmeldenummer: 09175393.9
(22) Anmeldetag: 09.11.2009
(51) Int. Cl.: B60W 40/10

(54) **Verfahren und Vorrichtung zur Kompensation eines Rollwinkels**

(30) Priorität: 20.11.2008 DE 102008058279
(71) Anmelder: Hella KGaA Hueck & Co., 59552 Lippstadt (DE)
(72) Erfinder: Feiden, Dirk, 12623 Berlin (DE)
(74) Vertreter: Schaumburg, Thoenes, Thurn, Landskron, Eckert

(57) **Zusammenfassung**

Die Erfindung betrifft Verfahren und eine Vorrichtung zur Kompensation eines Rollwinkels (α) beim Betrieb eines kameragestützten Fahrerassistenzsystems in einem Kraftfahrzeug. Dabei wird mit einer Kamera ein erstes Bild (32) erfasst und die Koordinaten zumindest zweier charakteristischer Punkte (30) des ersten Bildes (32) werden ermittelt. Mit der Kamera wird ein zweites Bild (33) erfasst und die Koordinaten der beiden charakteristischen Punkte (30) in dem zweiten Bild (33) werden ermittelt. Abhängig von den ermittelten Koordinaten der charakteristischen Punkte (30) in dem ersten und dem zweiten Bild (32, 33) werden zwei Ist-Verschiebungsvektoren (IV_1, IV_3) ermittelt, die jeweils repräsentativ sind für eine Verschiebung der charakteristischen Punkte (30) von dem ersten Bild (32) hin zu dem zweiten Bild (33) in einer Bildebene der Kamera. Abhängig von den ermittelten Koordinaten der charakteristischen Punkte (30) des ersten Bildes (32) und abhängig von einer Geschwindigkeit des Kraftfahrzeugs werden zwei Modell-Verschiebungsvektoren (MV_N) ermittelt, die jeweils die Verschiebung der charakteristischen Punkte (30) von dem ersten Bild (32) hin zu dem zweiten Bild (33) in der Bildebene modellieren. Abhängig von den ermittelten Ist-Verschiebungsvektoren (IV_1, IV_3) und Modell-Verschiebungsvektoren (MV_N) wird ein Referenzvektor ermittelt. Der Rollwinkel (α) wird dann abhängig von dem Referenzvektor ermittelt.

## Beschreibung

Die Erfindung betrifft ein Verfahren und eine Vorrichtung zur Kompensation eines Rollwinkels beim Betrieb eines kameragestützten Fahrerassistenzsystems in einem Kraftfahrzeug.

Moderne Fahrerassistenzsysteme werden regelmäßig mit Kameras gekoppelt und werden mittels Bildverarbeitung der von der Kamera aufgenommenen Bilder unterstützt. Beispielsweise erkennen die Kameras Geschwindigkeitsbegrenzungen und/oder Fahrbahnmarkierungen. Insbesondere ein Spurhalteassistent analysiert die von der Kamera aufgenommenen Bilder nach Fahrbahnmarkierungen und alarmiert den Fahrer des Kraftfahrzeugs, falls dieser die die Straße begrenzenden Fahrbahnmarkierungen überfährt.

Für eine präzise Analyse der Bilder der Kamera ist es vorteilhaft, wenn das Fahrerassistenzsystem und/oder das Bildverarbeitungssystem die genaue Ausrichtung der Kamera bezüglich der Fahrbahn kennt. Dabei ist es insbesondere vorteilhaft, wenn eine Bildsenkrechte auf einer unteren Kante der erfassten Bilder parallel zu einer Flächennormalen auf der Fahrbahn ist. Alternativ dazu ist es ausreichend, wenn ein Winkel zwischen der Flächennormalen der Fahrbahn und der Bildsenkrechten bekannt ist, so dass dieser Winkel bei der Bildanalyse berücksichtigt werden kann.

Der Winkel zwischen der Flächennormalen der Fahrbahn und der Bildsenkrechten in der Bildebene der Kamera kann sich bei einer ebenen Fahrbahn beispielsweise auf Grund einer unpräzisen eingebauten Kamera, auf Grund einer Tankbefüllung, auf Grund einer ungleichmäßigen Beladung des Kraftfahrzeugs und/oder auf Grund einer ungleichmäßigen Verteilung von Personen in dem Kraftfahrzeug ergeben. Der Winkel entspricht in Fahrtrichtung gesehen einem Rollwinkel des Kraftfahrzeugs und wird in diesem Zusammenhang nachfolgend als Rollwinkel bezeichnet.

Es ist Aufgabe der vorliegenden Erfindung, ein Verfahren und eine Vorrichtung zur Kompensation eines Rollwinkels beim Betrieb eines kameragestützten Fahrerassistenzsystems zu schaffen, die einfach und präzise die Kompensation des Rollwinkels ermöglichen.

Die Aufgabe wird gelöst durch die Merkmale der unabhängigen Ansprüche. Vorteilhafte Ausgestaltungen sind in den Unteransprüchen angegeben.

Die Erfindung zeichnet sich aus durch ein Verfahren und eine Vorrichtung zur Kompensation eines Rollwinkels beim Betrieb eines kameragestützten Fahrerassistenzsystems in einem Kraftfahrzeug. Dabei wird mit Hilfe einer Kamera des Kraftfahrzeugs ein erstes Bild erfasst und die Koordinaten zumindest zweier charakteristischer Punkte des ersten Bildes werden ermittelt. Danach wird mit Hilfe der Kamera ein zweites Bild erfasst und es werden die Koordinaten der beiden charakteristischen Punkte in dem zweiten Bild ermittelt. Abhängig von den ermittelten Koordinaten der charakteristischen Punkte in dem ersten und dem zweiten Bild werden zwei Verschiebungsvektoren ermittelt, die jeweils repräsentativ sind für eine Verschiebung der charakteristischen Punkte in einer Bildebene der Kamera, insbesondere von dem ersten Bild hin zu dem zweiten Bild. Abhängig von den ermittelten Koordinaten der charakteristischen Punkte des ersten Bildes und abhängig von einer Bewegung des Kraftfahrzeugs zwischen der Aufnahme des ersten Bildes und der Aufnahme des zweiten Bildes werden zwei Modell-Verschiebungsvektoren ermittelt, die jeweils die Verschiebung der charakteristischen Punkte in der Bildebene modellieren. Abhängig von den ermittelten Ist-Verschiebungsvektoren und Modell-Verschiebungsvektoren wird ein Referenzvektor ermittelt. Abhängig von dem ermittelten Referenzvektor wird der Rollwinkel ermittelt.

Dies ermöglicht einfach und präzise den Rollwinkel zu kompensieren, insbesondere bei geringem Applikationsaufwand und ohne zusätzliche Sensorik. Die Bilder können vollständigen von der Kamera erfassten Bildern entsprechen oder nur Teilen davon. Ferner werden die Bilder vorzugsweise in Fahrtrichtung des Kraftfahrzeugs erfasst. Die Bewegung des Kraftfahrzeugs zwischen der Aufnahme des ersten und des zweiten Bildes ist vorzugsweise charakterisiert durch eine Geschwindigkeit des Kraftfahrzeugs.

In einer vorteilhaften Ausgestaltung ist der Referenzvektor ein Modell-Normalenvektor, der senkrecht auf der Fahrbahn steht und somit einer Flächennormalen der Fahrbahn entspricht. Ferner wird vorzugsweise der Rollwinkel durch Projektion des Modell-Normalenvektors auf die Bildebene und einen Vergleich des projizierten Modell-Normalenvektors mit einer Bildsenkrechten in der Bildebene der Kamera ermittelt. Der Rollwinkel entspricht in diesem Zusammenhang dem Winkel zwischen dem projizierten Modell-Normalenvektor und der Bildsenkrechten.

In einer weiteren vorteilhaften Ausgestaltung werden drei oder mehr Ist-Verschiebungsvektoren und entsprechend drei oder mehr Modell-Verschiebungsvektoren ermittelt, von denen abhängig dann der Modell-Normalenvektor ermittelt wird. Dadurch kann ein mathematisches Gleichungssystem zum Ermitteln des Modell-Normalenvektors überbestimmt werden, was zu einem besonders präzisen Ermitteln des Modell-Normalenvektors beitragen kann.

In einer weiteren vorteilhaften Ausgestaltung wird zumindest einer der Ist-Verschiebungsvektoren verworfen und nicht weiter berücksichtigt, insbesondere der Ist-Verschiebungsvektor, dessen Winkelabweichung von den einem oder mehreren gemittelten Vektoren am größten ist. Dies kann dazu beitragen, falsch ermittelte Ist-Verschiebungsvektoren auszuschließen und nicht bei der Ermittlung der Modell-Verschiebungsvektoren und des Modell-Normalenvektors zu berücksichtigen und trägt so zu dem besonders präzisen Ermitteln des Modell-Normalenvektors bei.

In einer weiteren vorteilhaften Ausgestaltung sind die Modell-Verschiebungsvektoren von den Koordinaten des Modell-Normalenvektors abhängig. Der Modell-Normalenvektor wird ermittelt, indem durch Variation der Koordinaten des Modell-Normalenvektors ein Funktionswert einer Funktion minimiert wird, der einem Unterscheid zwischen allen berücksichtigten Ist-Verschiebungsvektoren und den entsprechenden Modell-Verschiebungsvektoren entspricht. Dies trägt dazu bei, dass der Modell-Normalenvektor mit besonders geringem Applikationsaufwand ermittelt wird. Der Unterschied zwischen den Ist-Verschiebungsvektoren und den entsprechenden Modell-Verschiebungsvektoren kann beispielsweise durch einen Betrag der Differenzen der zueinander gehörigen Vektoren und anschließendes Aufsummieren aller Beträge ausgedrückt werden. Der Modell-Normalenvektor entspricht der Flächennormalen auf der Fahrbahn genau dann optimal, wenn der Funktionswert minimal ist.

In einer weiteren vorteilhaften Ausgestaltung wird der ermittelte Rollwinkel zur Bildkorrektur des Kamerabildes verwendet. Alternativ oder zusätzlich kann der ermittelte Rollwinkel automatisch dem Fahrerassistenzsystem zur Verfügung gestellt werden. Dies trägt zu einer präzisen Funktionsweise des Fahrerassistenzsystems und damit zur Sicherheit des Fahrers des Kraftfahrzeugs bei.

In einer weiteren vorteilhaften Ausgestaltung werden die Modell-Verschiebungsvektoren mittels der allgemeinen Bewegungsgleichung, der Abbildungsgleichung einer Lochkamera und der allgemeinen Ebenengleichung ermittelt. Dies trägt ebenso zu dem geringen Applikationsaufwand beim Programmieren des Verfahrens bei.

Ausführungsbeispiele der Erfindung sind im Folgenden anhand von schematischen Zeichnungen näher erläutert.

Es zeigen:
- Figur 1: eine Sicht aus einem Kraftfahrzeug in Fahrtrichtung mit einem ersten Bild,
- Figur 2: eine zweite Sicht aus dem Kraftfahrzeug in Fahrtrichtung mit einem zweiten Bild,
- Figur 3: eine Überlagerung des ersten und des zweiten Bildes,
- Figur 4: Formeln zur Berechnung eines Modell-Normalenvektors, und
- Figur 5: eine schematische Darstellung einer Rollwinkelkorrektur.

Elemente gleicher Konstruktion oder Funktion sind figurenübergreifend mit den gleichen Bezugszeichen gekennzeichnet.

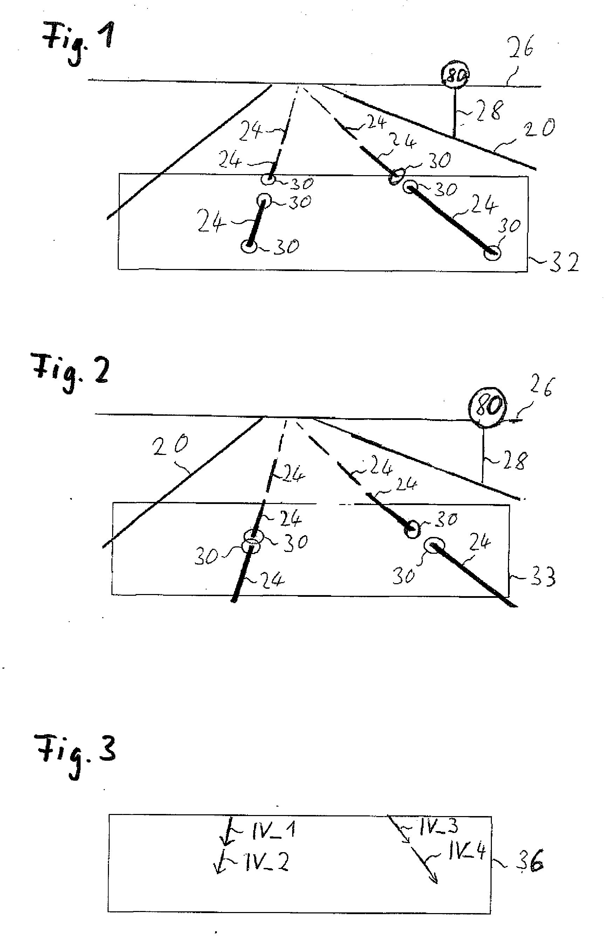

Figur 1 zeigt eine Straße 20 mit Fahrbahnmarkierungen 24. Die Straße 20 ist bis zu einem Horizont 26 einsehbar. Am Straßenrand ist ein Verkehrsschild 28 zu sehen. Von einer Kamera, insbesondere einer Monokamera, die in einem Kraftfahrzeug angeordnet ist, wird vorzugsweise in Fahrtrichtung des Kraftfahrzeugs ein erstes Bild 32 aufgenommen. Innerhalb des ersten Bildes 32 wird mittels eines Bilderkennungssystems nach charakteristischen Punkten 30 gesucht. Das Bilderkennungssystem kann dazu beispielsweise einen Eckenfinder aufweisen, der anhand von markanten Grauwertübergängen nach charakteristischen Punkten 30 auf der Straße 20 sucht. Dabei werden vorzugsweise charakteristische Punkte 30 gesucht, die einen möglichst großen Abstand zueinander haben.

Figur 2 zeigt eine Sicht auf die Straße 20 kurz nach Aufnahme des ersten Bildes 32. Dabei wird von der Kamera ein zweites Bild 33 aufgenommen. Das Bilderkennungssystem sucht erneut nach den charakteristischen Punkten 30, die nun jedoch aufgrund einer zwischenzeitlichen Bewegung des Kraftfahrzeugs in dem zweiten Bild 33 relativ zu dem ersten Bild 32 verschoben sind.

Durch einen in Figur 3 gezeigten Bildvergleich 36 kann ein Bildanalysesystem erste bis vierte Ist-Verschiebungsvektoren IV_1 bis IV_4 ermitteln, die repräsentativ sind für die Verschiebung der charakteristischen Punkte 30 in der Bildebene der Kamera zwischen der Aufnahme des ersten Bildes 32 und der Aufnahme des zweiten Bildes 33. Vorzugsweise werden weit mehr Ist-Verschiebungsvektoren IV_1 bis IV_4 ermittelt.

Dabei können auch ein oder mehrere der Ist-Verschiebungsvektoren IV_1 bis IV_4 nach deren Ermittlung wieder verworfen werden, beispielsweise wenn sie einen Winkel aufweisen, der stark von einem oder mehreren gemittelten Winkeln der übrigen Ist-Verschiebungsvektoren IV_1 bis IV_4 abweicht. Dadurch wird vermieden, dass falsch ermittelte Ist-Verschiebungsvektoren IV_1 bis IV_4 bei der weiteren Berechnung berücksichtigt werden.

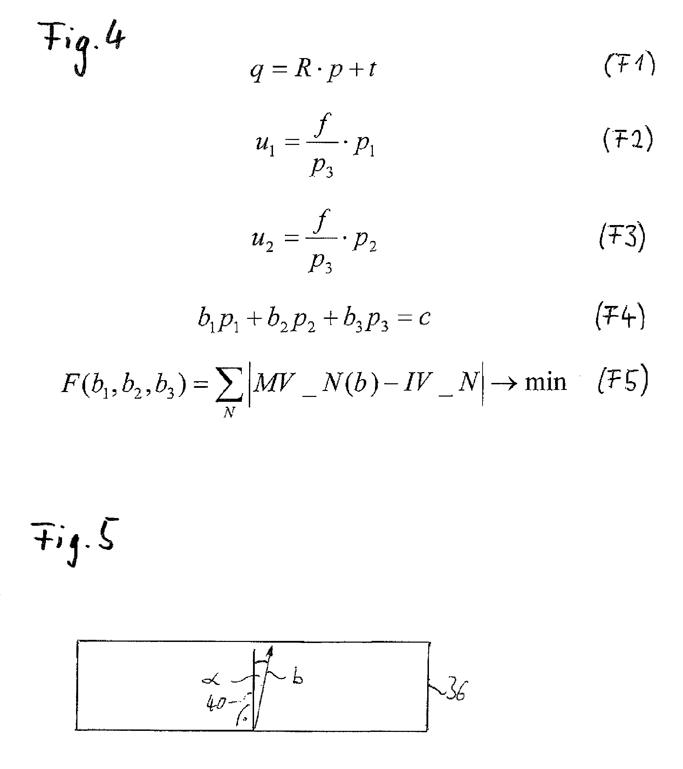

Ausgehend von den Koordinaten der charakteristischen Punkte 30 des ersten Bildes 32 werden zusätzlich zu den Ist-Verschiebungsvektoren IV_1 bis IV_4 Modell-Verschiebungsvektoren MV_N basierend auf den in Figur 4 gezeigten Formeln F1 bis F4 ermittelt. Das Ermitteln der Modell-Verschiebungsvektoren MV_N ist im Folgenden lediglich kurz skizziert. Für eine ausführliche Darstellung wird auf die Dissertation "Automatische Hinderniserkennung im fahrenden Kraftfahrzeug" von Dirk Feiden, Frankfurt am Main, 2002 auf den Seiten 63 bis 67 und auf "Digital Video Processing" von Tekalp, A. M. Prentice Hall, 1995, verwiesen.

Als Grundannahme wird davon ausgegangen, dass die Fahrbahn eben ist, dass das Kraftfahrzeug geradeaus fährt und dass sich das Bezugssystem mit dem Kraftfahrzeug bewegt. Die Formeln F2 und F3 zeigen eine Beziehung zwischen zweidimensionalen Koordinaten u₁ und u₂, beispielsweise eines der charakteristischen Punkte 30, in der Bildebene der Kamera und entsprechenden dreidimensionalen Koordinaten p₁, p₂, p₃, beispielsweise des entsprechenden charakteristischen Punktes 30, auf der realen Fahrbahn. Die Formeln F2 und F3 werden grundsätzlich auch als Abbildungsgleichungen einer Lochkamera bezeichnet. Anhand der Abbildungsgleichungen der Lockkamera können somit ausgehend von den in dem ersten Bild 32 erfassten charakteristischen Punkten 30 deren dreidimensionale Koordinaten in der Realität ermittelt werden. Ferner können durch die in Formel F1 dargestellte allgemeine Bewegungsgleichung dreidimensionale Koordinaten eines Punktes q ermittelt werden, der den Koordinaten eines Punktes p nach einer beliebigen Bewegung des Punktes p im dreidimensionalen Raum entspricht. Dabei bezeichnet R eine Rotationsmatrix und t einen Translationsvektor, die von einer Bewegung des Kraftfahrzeugs abhängen. Wird vereinfacht angenommen, dass das Kraftfahrzeug geradeaus fährt, und/oder die Berechnung nur dann durchgeführt, wenn eine Gierrate des Kraftfahrzeugs gleich Null ist, so vereinfacht sich die Rotationsmatrix R zu einer Einheitsmatrix und der Translationsvektor hat nur noch eine Komponente, die ungleich Null ist und die von der Geschwindigkeit des Kraftfahrzeugs abhängt. Somit können die dreidimensionalen Koordinaten q₁, q₂, q₃, der charakteristischen Punkte 30 nach der Bewegung des Kraftfahrzeugs zwischen der Aufnahme des ersten Bildes 32 und der Aufnahme des zweiten Bildes 33 ermittelt werden. In einer vierten Formel F4 ist die allgemeine Ebenengleichung dargestellt, die alle Punkte einer Ebene erfüllen, wobei b₁ bis b₃ die Koordinaten des Normalenvektors der entsprechenden Ebene sind. Durch die allgemeinen Abbildungsgleichungen der Lochkamera und die allgemeine Ebenengleichung können nun in Abhängigkeit eines Modell-Normalenvektors b die Modell-Verschiebungsvektoren MV_N ermittelt werden, die repräsentativ sind für die Verschiebung der charakteristischen Punkte 30 von dem ersten zu dem zweiten Bild 32, 33, allerdings ermittelt über die Verschiebung der charakteristischen Punkte 30 in der Realität in Abhängigkeit der Bewegung des Kraftfahrzeugs.

In anderen Worten wird die Verschiebung der charakteristischen Punkte 30 zwischen den Aufnahmen der Bilder 32, 33 einerseits durch einfaches Ausmessen in der Bildebene bestimmt, was die Ist-Verschiebungsvektoren IV_N repräsentieren, und andererseits durch Bestimmen der realen Verschiebung der charakteristischen Punkte 30 auf der realen Fahrbahn relativ zu dem Kraftfahrzeug und transformiert auf die Bildebene. Somit wird die Verschiebung der charakteristischen Punkte 30 aufgrund der Bewegung des Kraftfahrzeugs auf zwei unterschiedliche Arten bestimmt.

Eine Funktion gemäß Formel F5 stellt nun die Summe über die Beträge der Differenzen aller Modell-Verschiebungsvektoren MV_N und Ist-Verschiebungsvektoren IV_N dar. Ist diese Summe minimal, so entsprechen die Modell-Verschiebungsvektoren MV_N besonders gut den Ist-Versschiebungsvektoren. Ferner kann die Summe durch Variation des Modell-Normalenvektors b minimiert werden. Daher wird angenommen, dass der Modell-Normalenvektor b dem tatsächlichen Normalenvektor auf der Fahrbahn, insbesondere der Straße 20, entspricht, wenn die Summe minimal ist. In anderen Worten werden die Modell-Verschiebungsvektoren MV_N durch Variation des Modell-Normalenvektors b so lange variiert, bis sie möglichst genau dem Ist-Verschiebungsvektoren IV_N entsprechen. Vorzugsweise werden so viele Verschiebungsvektoren an Hand der beiden oder weiterer Bilder und über das dargestellte Modell ermittelt, dass die Gleichung gemäß der Formel F5 stark überbestimmt ist. Dies ermöglicht ein besonders präzises Annähern an den tatsächlichen Normalenvektor der Fahrbahnebene.

Figur 5 zeigt schematisch eine Projektion des ermittelten Modell-Normalenvektors b auf die Bildschirmebene. Der projizierte Modell-Normalenvektor b schließt mit einer Bildsenkrechten 40, die senkrecht auf einem unteren Bildrand der Bildebene 36 steht einen Winkel, insbesondere den Rollwinkel α ein. Zur Kompensation des Rollwinkels α kann dieser nun in dem Bildanalysesystem berücksichtigt werden und das Bild entsprechend gedreht werden. Vorzugsweise wird jedoch das Bild nicht verändert, sondern der ermittelte Rollwinkel α dem Fahrerassistenzsystem und/oder weiteren Fahrzeugsystemen zur Verfügung gestellt, so dass diese direkt den Rollwinkel α berücksichtigen, insbesondere kompensieren können.

## Patentansprüche

1. Verfahren zur Kompensation eines Rollwinkels (α) beim Betrieb eines kameragestützten Fahrerassistenzsystems in einem Kraftfahrzeug, bei dem
- mit Hilfe einer Kamera ein erstes Bild (32) erfasst wird und die Koordinaten zumindest zweier charakteristischer Punkte (30) des ersten Bildes (32) ermittelt werden,
- mit Hilfe der Kamera ein zweites Bild (33) erfasst wird und die Koordinaten der beiden charakteristischen Punkte (30) in dem zweiten Bild (33) ermittelt werden,
- abhängig von den ermittelten Koordinaten der charakteristischen Punkte (30) in dem ersten und dem zweiten Bild (32, 33) zwei Ist-Verschiebungsvektoren (IV_1, IV_3) ermittelt werden, die jeweils repräsentativ sind für eine Verschiebung der charakteristischen Punkte von dem ersten Bild (32) hin zu dem zweiten Bild (33) in einer Bildebene der Kamera,
- abhängig von den ermittelten Koordinaten der charakteristischen Punkte (30) des ersten Bildes (32) und abhängig von einer Bewegung des Kraftfahrzeugs zwischen der Aufnahme des ersten und des zweiten Bildes (32, 33) zwei Modell-Verschiebungsvektoren (MV_N) ermittelt werden, die jeweils die Verschiebung der charakteristischen Punkte (30) von dem ersten Bild (32) hin zu dem zweiten Bild (33) in der Bildebene modellieren,
- abhängig von den ermittelten Ist-Verschiebungsvektoren (IV_1, IV_3) und Modell-Verschiebungsvektoren (MV_N) ein Referenzvektor ermittelt wird,
- abhängig von dem ermittelten Referenzvektor der Rollwinkel (α) ermittelt wird.

2. Verfahren nach Anspruch 1, bei dem der Referenzvektor ein Modell-Normalenvektor (b) ist, der senkrecht auf einer Ebene steht, in der die charakteristischen Punkte (30) real liegen.

3. Verfahren nach Anspruch 2, bei dem der Rollwinkel (α) ermittelt wird durch Projektion des Modell-Normalenvektors (b) auf die Bildebene und Vergleich des projizierten Modell-Normalenvektors (b) mit einer Bildsenkrechten (40) der Kamera.

4. Verfahren nach Anspruch 3, bei der der Rollwinkel (α) dem Winkel zwischen dem projizierten Modell-Normalenvektor (b) und der Bildsenkrechten (40) entspricht.

5. Verfahren nach einem der vorstehenden Ansprüche, bei dem zu jedem ermittelten Ist-Verschiebungsvektor (IV_N) je ein Modell-Verschiebungsvektor (MV_N) ermittelt wird.

6. Verfahren nach einem der vorstehenden Ansprüche, bei dem drei oder mehr Ist-Verschiebungsvektoren (IV_1, IV_2, IV_3, IV_4) und entsprechend drei oder mehr Modell-Verschiebungsvektoren (MV_N) ermittelten werden, von denen abhängig dann der Modell-Normalenvektor (b) ermittelt wird.

7. Verfahren nach Anspruch 6, bei dem zumindest ein Ist-Verschiebungsvektor (IV_1, IV_2, IV_3, IV_4) verworfen und nicht weiter berücksichtigt wird, dessen Winkelabweichung von einem oder mehreren gemittelten Vektoren am größten ist.

8. Verfahren nach einem der vorstehenden Ansprüche, bei dem die Modell-Verschiebungsvektoren (MV_N) von den Koordinaten des Modell-Normalenvektors (b) abhängig sind und der Modell-Normalenvektor (b) ermittelt wird, indem durch Variation der Koordinaten des Modell-Normalenvektors (b) ein Funktionswert einer Funktion (F5) minimiert wird, der einem Unterschied zwischen allen berücksichtigten Ist-Verschiebungsvektoren (IV_1, IV_2, IV_3, IV_4) und den entsprechenden Modell-Verschiebungsvektoren (MV_N) entspricht.

9. Verfahren nach einem der vorstehenden Ansprüche, bei dem der ermittelte Rollwinkel (α) zur Bildkorrektur des Kamerabildes verwendet wird und/oder automatisch dem Fahrerassistenzsystem zur Verfügung gestellt wird.

10. Verfahren nach einem der vorstehenden Ansprüche, bei dem die Modell-Verschiebungsvektoren (MV_N) mittels der allgemeinen Bewegungsgleichung, der Abbildungsgleichung einer Lochkamera und der allgemeinen Ebenengleichung ermittelt werden.

11. Vorrichtung, die dazu ausgebildet ist, das Verfahren nach einem der vorstehenden Ansprüche abzuarbeiten.
